# EUROPÄISCHE PATENTANMELDUNG

(11) **EP 1 055 841 A2**
(43) Veröffentlichungstag der Anmeldung: **29.11.2000**
(21) Anmeldenummer: 00109082.8
(22) Anmeldetag: 02.05.2000
(51) Int. Cl.: F16F 15/02, F16F 15/00

(54) **Verfahren und Einrichtung zur Unterdrückung oder Dämpfung von Karosseriezittern bei Kraftfahrzeugen**

(30) Priorität: 22.05.1999 DE 19923704
(71) Anmelder: Volkswagen Aktiengesellschaft, 38436 Wolfsburg (DE)
(72) Erfinder: Lent-Philipps, Hans-Martin, Dr., 38518 Gifhorn (DE)

(57) **Zusammenfassung**

Die Erfindung betrifft ein Verfahren sowie eine Einrichtung zur Unterdrückung oder Dämpfung von Karosseriezittern bei Kraftfahrzeugen, bei welchen die Vibrationsschwingungen an Karosserieelementen gemessen und daraufhin gegenphasig erregte Schwingungen zur destruktiven Interferenz erzeugt, und diskreten Karosserieelementen zugeführt werden, gemäß Oberbegriff der Patentansprüche 1 und 8. Um hierbei eine effizientere Dämpfung und ggf. Eliminierung von Schwingungen in der Karosserie von Kraftfahrzeugen zu ermöglichen, ist erfindungsgemäß vorgeschlagen, daß die gegenphasig erregten Schwingungen in statische Elemente diagonal zum Karosserieboden verlaufend eingeleitet werden.

## Beschreibung

Die Erfindung betrifft ein Verfahren sowie eine Einrichtung zur Unterdrückung oder Dämpfung von Karosseriezittern bei Kraftfahrzeugen, bei welchem die Vibrationsschwingungen an Karosserieelementen gemessen und darauf hin gegenphasig erregte Schwingungen zur destruktiven Interferenz erzeugt und diskreten Karosserieelementen zugeführt werden, gemäß Oberbegriff der Patentansprüche 1 und 8.

Im Kraftfahrzeug werden verschiedenartige Schwingungen erzeugt, die letztendlich auch einen Einfluß auf die Fahrsicherheit und die Fahrstabilität des Fahrzeuges haben. Überdies spielen dabei auch Anforderungen an den Fahrkomfort eine Rolle.

Vibrationen entstehen im Kraftfahrzeug zum einen durch die Verbrennungsmaschine und ggf. über darüber eingekoppelte Schwingungen im Bereich des Antriebstranges. Weitergehende Schwingungen werden durch den Fahrbetrieb als solches erzeugt, die durch die Fahrbahnbeschaffenheit über das Fahrwerk in die Karosserie eingeleitet werden.

Zur Dämpfung der im Bereich der Verbrennungsmaschine entstehenden Vibrationsschwingungen werden Dämpfungselemente eingesetzt, die die Übertragung solcher Vibrationen auf die Karosserie entweder vermeiden oder zumindest dämpfen sollen.

Je nach Beschaffenheit des Fahrzeuges, d. h. je nach Konstruktion der Fahrgastzelle selbst, weisen verschiedene Karosserietypen auch verschiedene Stabilitätsprobleme auf. Besonders wichtig ist bei einem Fahrzeug auch die Torsionssteifigkeit, auf die es im Fahrbetrieb wesentlich ankommt, wenn es um die Dämpfung von fahrbetriebsbedingten Schwingungen geht. So ist beispielsweise die Limousinenbauart mit geschlossener Fahrgastzelle erheblich torsionssteifer, als ein Cabriolet. Weitergehende Probleme wiederum treten auf bei der Konstruktion von Kombis oder Caravan-Bauarten.

Verliert das Fahrzeug durch eine spezielle Konstruktion, wie beispielsweise bei Cabrioletbauart einen Teil seiner sonst üblicherweise vorhandenen Torsionssteifigkeit, so kommt es natürlich auch zu einer gewissen Schwingungsanfälligkeit.

So ist aus der EP 0 720 144 bekannt, zur Vibrationsreduktion in einem längserstreckten Element eines Fahrzeuges Sensoren anzuordnen und auch Schwingungserzeuger verteilt zu plazieren. Diese Schwingungserzeuger können dabei gezielt solche Schwingungen erzeugen und in das besagte längserstreckte Element des Fahrzeuges einleiten, daß es zur destruktiven Superpositionen der vorhandenen Schwingungen kommt.

Aus der US 5 409 078 ist eine Vibrationsdämpfungseinrichtung zur Vibrationsdämpfung zwischen Motor und dem Fahrgestell eines Kraftfahrzeuges bekannt. Hierbei werden Schwingungen erfaßt und über ansteuerbare Oszillationsmittel, also auch über Schwingungserreger in gleicher Weise, wie oben bereits beschrieben, gelöscht.

Aus der DE 197 12 292 A1 ist eine Schwingungsdämpfung bekannt, indem durch aktive Schwingungserzeugung bei Rohrflanschverbindungen eine längserstreckte metallische Konstruktion gedämpft werden kann.

Aus der DE 196 03 098 A1 ist es bekannt, insbesondere bei Cabrios eine sog. B-Säulenversteifung durch Querstreben vorzunehmen. Durch eine solche Konstruktion vermindert sich die Schwingungsanfälligkeit besonders bei dieser Cabrio-Bauart. Nachteilig ist hierbei, daß keine aktive Schwingungseliminierung vorgenommen wird.

Nachteilig bei den übrigen Vibrationadämpfungsverfahren und Einrichtungen ist, daß die Schwingungserzeuger entweder zu undifferenziert arbeiten oder nicht effizient genug an oder in der Karosserie plaziert sind. Demnach ist damit natürlich keine vollständige und effiziente Schwingungsdämpfung möglich.

Das allumfassende Problem ist somit daß Karosseriezittern von verschiedenartigen Schwingungen herrührt. Oftmals werden resultierend auch Torsionsschwingungen in der Karosserie erzeugt, insbesondere bei nicht sehr verbindungssteifen, also torsionssteifen Cabrio-Bauarten.

Der Erfindung liegt somit die Aufgabe zugrunde, ein Verfahren sowie eine Einrichtung der gattungsgemäßen Art dahingehend weiterzubilden, daß eine effizientere, gezieltere Bedämpfung der Karosserie erzielt wird, um das besagte Karosseriezittern zu minimieren oder gar zu eliminieren.

Die gestellte Aufgabe wird bei einem Verfahren der gattungsgemäßen Art erfindungsgemäß durch die kennzeichnenden Merkmale des Patentanspruches 1 gelöst.

Bei einer Einrichtung der gattungsgemäßen Art wird die gestellte Aufgabe erfindungsgemäß durch die kennzeichnenden Merkmale des Patentanspruches 8 gelöst.

Vorteilhafte Ausgestaltungen des erfindungsgemäßen Verfahrens sind in den Ansprüchen 2 bis 7 angegeben, und vorteilhafte Ausgestaltungen der erfindungsgemäßen Einrichtung sind in den übrigen Ansprüchen 9 bis 15 angegeben.

Kern der Erfindung ist somit sowohl in verfahrensgemäßer, als auch in einrichtungsgemäßer Weise, daß die gegenphasig erregten Schwingungen in statische Elemente diagonal zum Karosserieboden verlaufend eingeleitet werden. Dadurch ist es erstmalig möglich, auf die oben beschriebene kritische Schwachstelle der Fahrzeugkarosserie gezielt einwirken zu können. Da die meisten Schwingungen im Bereich der Karosserie selbst aus einer Torsionsinstabilität herrühren, greift dort genau die erfindungsgemäße Einspeisung der gegenphasig erregten Schwingungen zur destruktiven Interferenz. Im übrigen sei bemerkt, daß eine absolute Torsionssteifigkeit der Karosserie ohnehin in keiner Konstruktionsbauart gewährleistet werden kann. Insofern ist das erfindungsgemäße Verfahren sowie die erfindungsgemäße Einrichtung in allen Fahrzeugtypen effizient und nutzbringend einsetzbar.

Im Gegensatz zu einer entweder längs zur Fahrtrichtung bzw. zur Karosserieerstreckung, oder quer dazu gewählten Einspeisung von gegenphasigen Schwingungen, wird beim erfindungsgemäßen Diagonaleinspeisen der Erfindung erreicht, daß diese besagte resultierende Schwingung sowohl eine Längs- als auch eine Querkomponente aufweist. Somit können nicht nur auf die Quer- und Längsschwingungen im Kraftfahrzeug Einfluß genommen werden, sondern insbesondere auf die daraus resultierenden diagonal verlaufenden Torsionsschwingungen.

In weiterer vorteilhafter Ausgestaltung des erfindungsgemäßen Verfahrens ist angegeben, daß über zwei sich kreuzende Diagonallinien Schwingungen erregt und zugeführt werden. Auf diese Weise läßt sich eine feinfühlige Einflußnahme auf ungewollte Schwingungen nehmen. In weiterer vorteilhafter Ausgestaltung ist angegeben, daß die Schwingungserregung hierzu elektrisch erfolgt, wobei dann weitergehend auch die Schwingungsermittlung piezoelektrisch erfolgen kann. Auf diese Weise sind einfache Konstruktionen gegeben und im übrigen auch einfache Schwingungserzeuger konstruierbar.

In weiterer vorteilhafter Ausgestaltung ist angegeben, daß die Schwingungen phasenselektiv oder phasenempfindlich gemessen werden. Hierdurch kann genau bestimmt werden, zu welcher Zeit und mit welcher Phase die gegenphasigen Schwingungen eingeleitet werden müssen, um eine vollständige Destruktion der ungewollten Schwingung zu erreichen.

In weiterer vorteilhafter Ausgestaltung kann dabei vorgesehen werden, daß zur destruktiven Interferenz sowohl Transversalschwingungen, als auch Longitudinalschwingungen erregt werden können. Dies kann beispielsweise durch eine entsprechend gewählte Plazierung der Schwingungserreger erreicht werden.

Eine entsprechend erfindungsgemäße Plazierung der Schwingungserreger gemäß dem angegebenen Verfahren ist, dieselben in oder an den Diagonalstreben des Karosseriebodens anzuordnen. Dort haben sie die günstigste Einleitung über die Diagonalen der Karosseriekonstruktion. In weiterer vorteilhafter Ausgestaltung der erfindungsgemäßen Einrichtung ist angegeben, daß ein oder mehrere Schwingungserreger zur Erzeugung von Longitudinalschwingungen in einer Trennfuge zwischen zwei Diagonalstrebenabschnitte angeordnet sind. Zur Erzeugung von Transversalschwingungen können dann ein oder mehrere Schwingungserzeuger seitlich an der bzw. an den Diagonalstreben angeordnet sein.

Die Schwingungserreger sind dabei piezoelektrische Elemente, so wie beispielsweise die Schwingungssensoren es auch sein können. Vorteilhaft ist hierbei, daß Schwingungserregung und Schwingungsermittlung auch über ein und dasselbe Element erfolgen kann, wodurch keine gesonderten Sensoren neben den Schwingungserregern notwendig sind.

Dazu sind die Schwingungssensoren/Schwingungserzeuger mit einer elektronischen Einheit verschaltet, in welcher Schwingungssignale phasenempfindlich gemessen und phasenselektiv Schwingungserzeugungsimpulse erzeugt werden können.

Um beides in einer gemeinsamen Baueinheit zu realisieren, d. h. Schwingungssensor und Schwingungserzeuger, erfolgt Messung und Erzeugung der Signale alternierend, was durch die Elektronik gegeben wird. Das heißt in einem Zeittakt wird das piezoelektrische Element als Sensor betrieben, wobei mechanische Kontraktionen über den piezoelektrischen Effekt ein entsprechend proportionales elektrisches Signal erzeugen. Dieses Signal trägt im übrigen sowohl die Information der Amplitude, als auch der Phase. Das heißt, die Schwingung kann in ihrer Stärke, d.h. in ihrer Amplitude erfaßt werden, aber auch hinsichtlich ihrer Frequenz und sogar ihrer Phasenlage. Letzteres ist durch die destruktive Gegenschwingungserzeugung von bedeutendster Wichtigkeit. Darüber hinaus ist jedoch auch die Amplitude wichtig, um eine entsprechende Dosierung hinsichtlich der gegenphasigen Schwingung mit möglichst entsprechender Amplitude gewährleisten zu können.

In einem anderen Zeittakt können dann dieselben piezoelektrischen Elemente mit elektrischen Stellsignalen, d. h. einem Schwingungssignal beaufschlagt werden, wodurch dann wiederum in umgekehrter Wirkweise des piezoelektrischen Effektes, aus dem elektrisch zugeführten Signal eine mechanische Kontraktion bzw. Elongation bewirkt wird.

Somit ist die Realisierung sowohl in verfahrensgemäßer, als auch in einrichtungsgemäßer Hinsicht denkbar einfach, wobei die Diagonaleinspeisung der Dämpfungsschwingung zu einer sehr effizienten Dämpfung der Vibration im Fahrzeug führt.

Die Erfindung ist in der Zeichnung dargestellt und nachfolgend näher beschrieben.

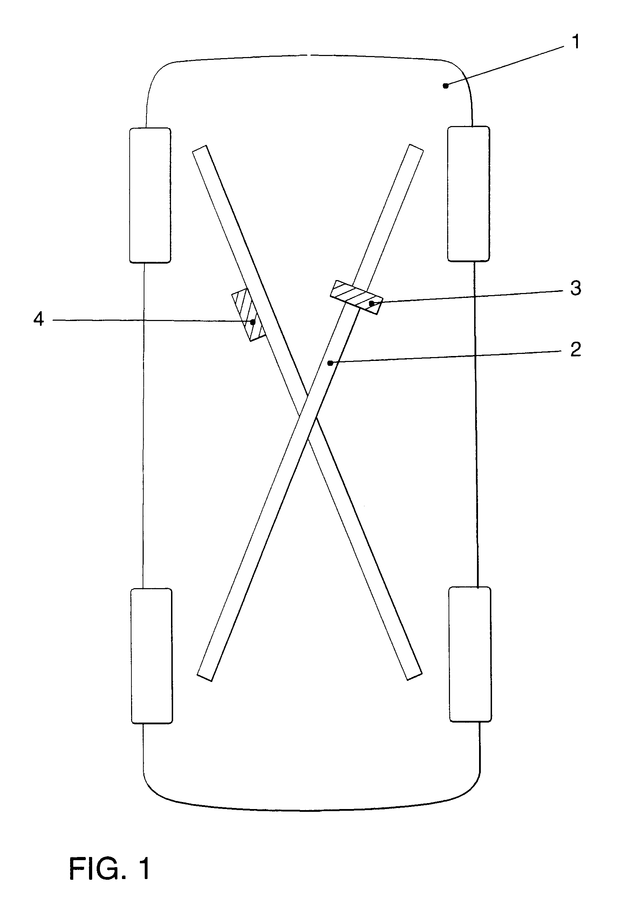

Figur 1 zeigt in einfacher schematischer Darstellung die Draufsicht auf einen Fahrzeugboden eines Fahrzeugs 1. Die Karosserie ist in ihren Einzelelementen nicht weiter dargestellt. Lediglich dargestellt sind am Fahrzeugboden angebrachte Diagonalstreben 2, die auch tatsächlich entlang der Fahrzeugdiagonalen verlaufen. Diese Diagonalstreben 2 versteifen das Fahrzeug zum einen im Hinblick auf seine gewünschte Torsionssteifigkeit, zum anderen sind es aber genau diejenigen mechanischen Elemente, auf welche in erfindungsgemäßer Weise die gegenphasige Dämpfungsschwingung eingespeist wird.
   Dieses Ausführungsbeispiel zeigt zwei Ausgestaltungen im Hinblick auf die Schwingungserzeuger bzw. die Schwingungssensoren 3 und 4. Allgemein sei noch ausgeführt, daß im Fahrzeug bzw. in der Fahrzeugkarosserie im wesentlichen Transversalschwingungen der mechanischen Einzelelemente auftreten. Darüber hinausgehend ist es jedoch Fakt, daß an Umlenkstellen, an Knotenblechen oder an Verbindungselementen, die eine zum jeweiligen längserstreckten Element abknickende Richtung aufweisen, auch Longitudinalschwingungen angeregt werden können. Somit treten dann insgesamt in der Fahrzeugkarosserie in Summe sowohl Longitudinal- als auch Transversalschwingungen auf. Figur 1 zeigt somit mit dem Schwingungserzeuger bzw. Schwingungssensor 3 eine quasi longitudinale Plazierung desselben. Hierbei wird eine Diagonalstrebe in zwei Diagonalstrebenabschnitte aufgetrennt und dazwischen der Schwingungserzeuger bzw. Schwingungssensor 3 plaziert. Ist dieser dann beispielsweise ein piezoelektrisches Element, weiches unter elektrischer Signalbeaufschlagung eine Kontraktion bzw. Elongation ausführt, so wird ein longitudinaler Hub in die Diagonalstrebe 2 eingespeist. Durch die Umlenkung an den Enden der Diagonalstreben in die übrige Karosserie werden aus der Longitudinalschwingung auch Transversalschwingungen generiert. Darüber hinaus hat die Elongation über diese zunächst longitudinal eingespeiste Schwingung den Vorteil, einen kurzen, wenn auch kleinen Torsionsgegenhub in die Karosserie einzuspeisen, was zu ihrer weiteren Stabilisierung von Vorteil sein kann.
   Mit dem Schwingungserzeuger bzw. Schwingungssensor 4 ist die Erregung von reinen Transversalwellen möglich. Hierzu ist der Schwingungserzeuger/-sensor 4 seitlich an die Diagonalstrebe angebracht, so daß in entsprechender Weise Transversalschwingungen erzeugbar sind, die dann auf die gleiche Weise diagonal in die Fahrzeugkarosserie eingespeist werden.

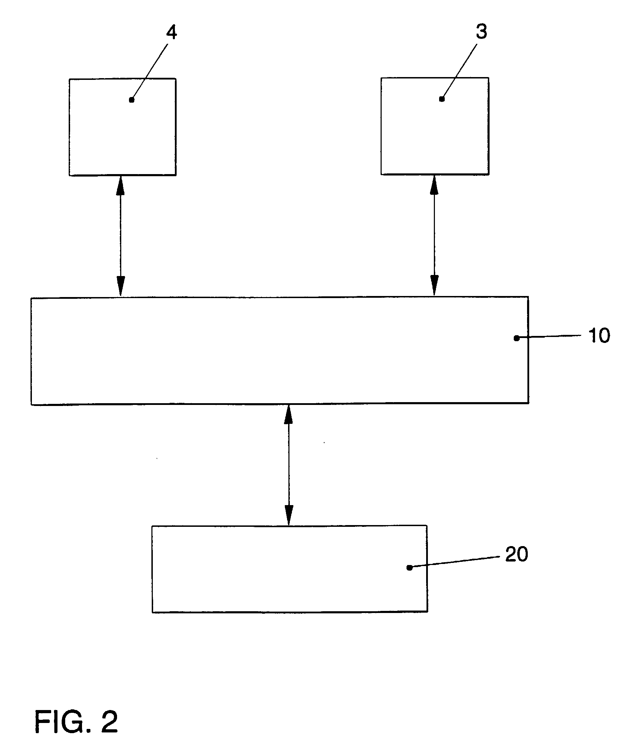

Figur 2 zeigt in einfacher schematischer Darstellung die Funktion und Steuerung der Schwingungserzeuger bzw. Schwingungssensoren 3 und 4. Hier sei noch einmal deutlich ausgeführt, daß sowohl Schwingungserzeuger, als auch Schwingungssensor jeweils ein und dasselbe Bauelement sind. Dies aus dem Grund, weil, wie oben beschrieben, ein piezoelektrisches Element in diesem Ausführungsbeispiel verwendet wird. Die besagten Schwingungserzeuger/-sensoren 3 und 4 sind signaltechnisch mit einem Signaleingang/-ausgang 10 verbunden. Die Verschaltung mit den Schwingungserzeugern bzw. den - sensoren ist hierbei bi-direktional, weil die besagten Elemente 3 und 4 sowohl als Schwingungserzeuger, als auch als Schwingungssensor arbeiten. Der Unterschied besteht lediglich in der zeitlich unterschiedlichen Beaufschlagung der Elemente. Der besagte Signalein-/ausgang 10 ist dabei bi-direktional mit einer Schwingungsauswertung 20 verbunden. In dieser Schwingungsauswertung 20 worden die sensorisch über die Schwingungssensoren 3 und 4 ermittelten Schwingungsgrößen bestimmt. Dabei erfolgt die Detektion und Auswertung phasenempfindlich und amplitudenproportional. Anhand der ermittelten Werte wird sodann in der Schwingungsauswertung 20 die Erzeugung der Gegenschwingungssignale generiert. Diese wird dann in einer anderen Zeitphase und entsprechend um 180° phasenversetzt zur detektierten Schwingung zu den Schwingungserzeugern 3 und 4 gebracht. Die elektrische Beaufschlagung der Schwingungserzeuger 3 und 4 ist dabei so gewählt, daß sie optimal, möglichst genau gegenphasig, d. h. um 180° phasenversetzt zur detektierten Schwingung ausgelöst werden. Bei Übereinstimmung der Amplitude, die ja ebenfalls gemessen wird, wird die geeignete Gegenschwingung angepaßt und in entsprechender Phaselage ausgelöst. Die besagte Gegenschwingung wird dann über die Diagonalstreben 2 in die Fahrzeugkarosserie eingespeist und führt dort zu einer destruktiven Interferenz mit der im Fahrzeug gemessenen Schwingung. Dies führt zu einer Löschung der Schwingung und damit zum Eliminieren des eingangs beschriebenen Karosseriezitterns.

## Patentansprüche

1. Verfahren zur Unterdrückung oder Dämpfung von Karosseriezittern bei Kraftfahrzeugen, bei welchen die Vibrationsschwingungen an Karosserieelementen gemessen und daraufhin gegenphasig erregte Schwingungen zur destruktiven Interferenz erzeugt und diskreten Karosserieelementen zugeführt werden,
dadurch gekennzeichnet, daß
die gegenphasig erregten Schwingungen in statischen Elemente diagonal zum Karosserieboden verlaufend eingeleitet werden.

2. Verfahren nach Anspruch 1,
dadurch gekennzeichnet, daß
über zwei sich kreuzende Diagonallinien Schwingungen erregt und zugeführt werden.

3. Verfahren nach Anspruch 1 oder 2,
dadurch gekennzeichnet, daß
die Schwingungserzeugung piezoelektrisch erfolgt.

4. Verfahren nach Anspruch 3,
dadurch gekennzeichnet, daß
auch die Schwingungsermittlung piezoelektrisch erfolgt.

5. Verfahren nach einem der vorhergehenden Ansprüche,
dadurch gekennzeichnet, daß
die Schwingungen phasenselektiv oder phasenempfindlich gemessen werden.

6. Verfahren nach einem der vorhergehenden Ansprüche,
dadurch gekennzeichnet, daß
zur destruktiven Interferenz Transversalschwingungen erregt werden.

7. Verfahren nach einem der vorhergehenden Ansprüche,
dadurch gekennzeichnet, daß
zur destruktiven Interferenz Longitudinaischwingungen erregt werden.

8. Einrichtung zur Unterdrückung oder Dämpfung von Karosseriezittern bei Kraftfahrzeugen, bei welchen die Vibrationsschwingungen an Karosserieelementen gemessen und daraufhin gegenphasig erregte Schwingungen über Schwingungserzeuger zur destruktiven Interferenz erzeugt und auf diskrete Karosserieelemente eingebracht werden,
dadurch gekennzeichnet, daß
die Schwingungserreger (3, 4) in oder an den Diagonalstreben (2) des Karosseriebodens (1) angeordnet sind.

9. Einrichtung nach Anspruch 8,
dadurch gekennzeichnet, daß
ein oder mehrere Schwingungserreger (3) zur Erzeugung von Longitudinalschwingungen in einer Trennfuge zwischen zwei Abschnitten der Diagonalstreben (2) angeordnet ist bzw. sind.

10. Einrichtung nach Anspruch 8,
dadurch gekennzeichnet, daß
ein oder mehrere Schwingungserreger (4) zur Erregung von Transversalschwingungen seitlich an der bzw. an den Diagonalstreben (5) angeordnet ist bzw. sind.

11. Einrichtung nach einem der vorhergehenden Ansprüche,
dadurch gekennzeichnet, daß
die Schwingungserreger (3, 4) piezoelektrische Elemente sind.

12. Einrichtung nach einem der vorhergehenden Ansprüche,
dadurch gekennzeichnet, daß
die Schwingungssensoren piezoelektrische sind.

13. Einrichtung nach einem der vorhergehenden Ansprüche,
dadurch gekennzeichnet, daß
die Schwingungserreger und die Schwingungssensoren ein und dieselben Elemente (3, 4) sind.

14. Einrichtung nach Anspruch 13 oder nach einem der vorhergehenden Ansprüche,
dadurch gekennzeichnet, daß
die Schwingungssensoren/erzeuger (3, 4) mit einer elektronischen Einheit (10, 20) verschaltet sind, in weicher Schwingungssignale phasenempfindlich gemessen und phasenselektiv Schwingungserzeugungsimpulse erzeugbar sind.

15. Einrichtung nach Anspruch 14,
dadurch gekennzeichnet, daß
die Messung und Erzeugung der Signale alternierend erfolgt.
